# EUROPÄISCHE PATENTSCHRIFT

(11) **EP 1 574 613 B1**
(45) Veröffentlichungstag und Bekanntmachung des Hinweises auf die Patenterteilung: **07.05.2008**
(21) Anmeldenummer: 04027607.3
(22) Anmeldetag: 20.11.2004
(51) Int. Cl.: D06N 7/00, A41D 27/06, D06M 17/04, C08L 23/06

(54) **Textile Flächengebilde mit rasterförmiger Beschichtung, deren Herstellung und Verwendung**
Pattern coated textile fabric, process for making it and its use
Structure textile revêtue sous forme de trames, procédé de fabrication et utilisation

(30) Priorität: 13.03.2004 DE 102004012269
(43) Veröffentlichungstag der Anmeldung: 14.09.2005
(73) Patentinhaber: Carl Freudenberg KG, 69469 Weinheim (DE)
(72) Erfinder: Kalbe, Michael, 08190 Sant Cugat (ES); Grynaeus, Peter, 69488 Birkenau (DE); Schmitt, Martin, 69517 Gorxheimertal (DE); Staudenmayer, Oliver, 69469 Weinheim (DE)

(56) Entgegenhaltungen:
- EP-A- 0 097 496
- GB-A- 1 420 497
- US-A- 4 415 622

## Beschreibung

Die vorliegende Erfindung betrifft textile Flächengebilde, die sich insbesondere als Einlage- oder Futterstoffe eignen, und die sich durch verbesserte anwendungstechnische Eigenschaften und durch verbesserte Verarbeitbarkeit auszeichnen, sowie deren Herstellung und Verwendung als Einlagen für Textilien.

Es ist bekannt, dass für Einlage- oder Futterstoffe als Haftmedien für die Heißverklebung verschiedenste Thermoplaste eingesetzt werde können. Zum Einsatz kommen dabei üblicherweise Copolyamide, Copolyester und Polyolefine.

Aus dem Stand der Technik sind mehrere Ansätze zur Verbesserung der Verarbeitungs- und Anwendungseigenschaften von Einlagestoffen bekannt.

So beschreibt die US-A-3,893,883 mit Schmelzkleber beschichtete textile Flächengebilde, bei denen als Schmelzkleber eine Mischung aus einem ausgewählten Polyethylen und einem Terpenharz eingesetzt wird.

In der EP-A-110,454 werden Einlagestoffe mit verbessertem Haftvermögen und Beständigkeit bei chemischen Reinigungsverfahren beschrieben, die durch den Einsatz von ausgewählten Polyethylens mit sehr enger Verteilung des Molekulargewichts, hoher Dichte und ausgewähltem MFI gekennzeichnet sind.

EP-A-97,496 beschreibt einen Oberstoff, der mit einem mehrschichtigen Polymemetz verstärkt ist. Dabei wird die der Oberfläche des Oberstoffes zugewandte Seite des Polymemetzes aufgeschmolzen und verbindet das darüberliegende verstärkende und nicht aufgeschmolzene Polymer mit dem Oberstoff.

Zur Verbesserung von Griff- und Haftwertänderungen innerhalb eines breiten Verarbeitungsumfanges und zum Bereitstellen von einheitlichen Fixierbedingungen bei einer großen Zahl von Oberstoffen sind bereits textile Flächengebilde mit rasterförmigen Beschichtungen aus mindestens zwei übereinanderliegenden rasterförmigen Schichten aus Heißsiegelklebern unterschiedlicher Kleberbeschaffenheit entwickelt worden. Derartige Flächengebilde sind in der DE-A-22 14236 und der DE-A-23 51 405 beschrieben. In den vorbekannten Flächengebilden wurden bereits Haftkleber aus unterschiedlichen Polymeren eingesetzt. Dieses bekannte Doppelpunktverfahren" hat sich seit Jahren in der betrieblichen Praxis bei der Herstellung und Verarbeitung von Einlage- und Futterstoffen bewährt.

Bedingt durch den unterschiedlichen molekularen Aufbau der Polymeren unterscheiden sich diese in ihren physikalischen und chemischen Eigenschaften wie z.B. Schmelzpunkt, Viskosität und Stabilität gegen Lösemittel wie Waschlaugen und Chemischreinigungsmittel. Wobei diese Größen eine entscheidende Rolle spielen bei der Auswahl des Polymeren für das Einsatzgebiet der Einlage.

So wird beispielsweise für den Bereich der Hemdeneinlagen, die Waschbedingungen bis 95°C bestehen müssen, typischerweise Polyethylen hoher Dichte (nachstehend aus "HDPE" genannt) als Haftmasse eingesetzt. Dieses Polymer weist einen hohen Schmelzbereich z.B. von 130°C und einen niedrigen MFI-Wert (Schmelzindex oder melt-flow-index) von 10-20 g/10 Minuten (190°C /2,16 kg Belastung) auf. Nachteilig dabei ist, dass durch den hohen Schmelzbereich und die hohe Viskosität (entsprechend einem niedrigen MFI-Wert) des Polymeren Fixiertemperaturen größer 140°C notwendig sind. Außerdem sind zum Erzielen einer ausreichenden Haftwirkung sehr große Mengen des HDPE notwendig.

Für Oberstoffe die durch ihre Temperaturempfindlichkeit Fixiertemperaturen kleiner 135 °C benötigen, muss daher auf die Gruppe der Copolyamide (z.B. solche mit Schmelzpunkten im Bereich von 108-120°C und MFI-Werten von 30 g/10 Minuten (140°C / 2,16 kg)) und/oder auf die Gruppe der Copolyester zurückgegriffen werden. Diese Polymere zeigen allerdings bei Fixiertemperaturen unter 135°C keine Waschbeständigkeit bei 95°C mehr. Wenn die Waschbeständigkeit jedoch nicht gefordert ist, kann die eingesetzte Menge an Haftmasse gegenüber dem HDPE deutlich reduziert werden und es kann ein weicherer Griff erzeugt werden. Weiterer Vorteil der Copolyamide und Copolyester ist, dass sie gegen eine deutlich breitere Palette an unterschiedlichen Oberstoffen fixiert werden können und zu guten Haftergebnissen führen.

Bei der Verwendung von Copolyamiden ergeben sich hingegen Probleme in Bezug auf Bekleidung, die in so genannten "Post Processing" Verfahren verarbeitet wird. So wird beispielsweise beim Verfahren des sogenannten "garment dyeing" das Laminat nach der Laminierung des Oberstoffes mit der Einlage einem Färbeprozess unterworfen der bei Temperaturen bis 95°C stattfindet. Hier zeigen die Copolyamide als Nachteile, dass sie zum einen meist nicht beständig gegen die 95°C Verfahrensbedingungen sind und dass sie andererseits, bedingt durch Ihre chemische Natur, mehr Farbstoff als der Oberstoff aufnehmen (color pick up), was zu ungewünschten Farbveränderungen führt.

Durch Einsatz von niedriger schmelzenden Polyethylen-Typen (Polyethylen niedriger Dichte = LDPE) mit höheren MFI-Werten (entsprechend niedrigeren Viskositäten) sind diese Nachteile nicht zu kompensieren, da die LDPE Typen bedingt durch ihre niedrige Viskosität (=niedrigeres Molekulargewicht) und niedrigen Schmelzpunkt keine Waschbeständigkeit bis 95°C zeigen.

Ausgehend von diesem Stand der Technik ist es Aufgabe der vorliegenden Erfindung, mit Haftklebern ausgerüstete textile Flächengebilde bereitzustellen, die bei Temperaturen unterhalb oder bis zu 135 °C problemlos verarbeitet werden können und die eine Waschbeständigkeit bis 95 °C zeigen.

Eine weitere Aufgabe der vorliegenden Erfindung besteht in der Bereitstellung von mit Haftklebern ausgerüsteten textilen Flächengebilden, die bei der Verarbeitung unter den Bedingungen des "post processing" die bekannten Nachteile des Standes der Technik nicht mehr aufweisen, also die Bedingungen der verschiedenen "post processing" Schritte bestehen und dabei die bekannten Nachteile, wie color pick up und Haftungsverlust nicht mehr aufweisen.

Eine weitere Aufgabe der vorliegenden Erfindung besteht in der Bereitstellung von mit Haftklebern ausgerüsteten textilen Flächengebilden, die mit möglichst geringer Einsatzmenge von Haftklebern auf einer breiten Oberstoffpalette mit guten Haftergebnissen fixierbar sind.

Die vorliegende Erfindung betrifft ein textiles Flächengebilde mit einer rasterförmigen Beschichtung aus zwei übereinanderliegenden rasterförmigen Schichten aus Heißsiegelklebern unterschiedlicher Kleberbeschaffenheit und ist dadurch gekennzeichnet, dass beide Schichten aus Heißsiegelklebern Polyolefine enthalten, dass die direkt auf dem textilen Flächengebilde aufgetragene erste Heißsiegelkleberschicht einen MFI-Wert von kleiner gleich 10 g/10 Minuten (190°C /2,16 kg) aufweist und dass die auf der ersten Heißsiegelkleberschicht aufgetragene zweite Heißsiegelkleberschicht einen MFI-Wert von 11 bis 50 g/10 Minuten (190°C /2,16 kg) aufweist.

Der zur Ausbildung der ersten Schicht eingesetzte Heißsiegelkleber auf der Basis von Polyolefin weist vorzugsweise einen MFI-Wert von 5 bis 10, insbesondere von 6 bis 9 g/10 Minuten (190°C /2,16 kg) auf.

Der zur Ausbildung der zweiten Schicht eingesetzte Heißsiegelkleber auf der Basis von Polyolefin weist vorzugsweise einen MFI-Wert von 11 bis 30 g/10 Minuten, insbesondere von 15 bis 25 g/10 Minuten (190°C /2,16 kg) auf.

Als Heißsiegelkleber werden Kleber auf Polyolefinbasis eingesetzt. Die Natur der dabei eingesetzten Polyolefine ist dabei grundsätzlich frei wählbar, sofern die oben definierten MFI-Werte eingehalten werden.

In einer bevorzugten Ausführungsform wird für die erste Schicht ein Heißsiegelkleber eingesetzt, der mindestens ein Polyethylen hoher Dichte ("HDPE") enthält, und für die zweite Schicht wird ein Heißsiegelkleber eingesetzt, der mindestens ein Homo- oder Copolymer abgeleitet von einem oder mehreren alpha-Olefinen enthält und mindestens einer der Heißsiegelkleber, vorzugsweise beide Heißsiegelkleber, enthalten zusätzlich mindestens ein Copolymer, das von mindestens einem alpha-Olefin, und mindestens einer ethylenisch ungesättigten Säure und/oder deren Anhydrid und/oder einer ethylenisch ungesättigten Epoxidverbindung abgeleitet ist.

Es wurde in überraschender Weise gefunden, dass durch Einsatz von Haftklebern mit ausgewählten Schmelzviskositäten und in Kombination mit dem an sich bekannten Doppelpunktverfahren zum Auftrag der Haftmasse eine Einlage mit einer auf Polyolefinen basierenden Haftmasse dargestellt werden kann, die bei Temperaturen unter 135°C auf einer breiten Oberstoffpalette fixierbar ist, und die danach auch "post processing" Schritte und/oder Waschbehandlungen bis 95°C besteht, sowie beim "garment dyeing" keinen "color pick up" zeigt.

Weiter wurde festgestellt, dass durch Zusatz von mit ausgewählten polaren Monomeren modifizierten Polyolefinen, beispielsweise von mit Maleinsäure oder Glycidylmethacrylat und gegebenenfalls mit Acrylsäureestern modifizierten Polyolefinen Haftkleber formuliert werden können, die besonders gute Ergebnisse zeigen.

Ferner wurde überraschenderweise gefunden, dass für die Erreichung sehr guter Haftergebnisse nur ein im Vergleich zu sonst bei Polyolefinen benötigten Mengen geringer Einsatz an Haftmasse notwendig ist.

Die erfindungsgemäß mit Haftklebern modifizierten textilen Flächengebilde können nach sämtlichen flächenbildenden Techniken hergestellt werden. Beispiele dafür sind Weben, Legen, Wirken, Stricken oder nasse oder trockenen Vliesherstellungsverfahren.

Unter dem Begriff "textiles Flächengebilde" sind im Rahmen dieser Beschreibung Gewebe, Gestricke, Gewirke, Gelege oder insbesondere Vliesstoffe zu verstehen.

Typischerweise weisen die erfindungsgemäßen textilen Flächengebilde, insbesondere die Vliesstoffe, Flächengewichte von 0,05 bis 500 g/m² auf.

Besonders bevorzugt kommen textile Flächengebilde mit geringen Flächengewichten von 5 bis 150 g/m² zum Einsatz.

Erfindungsgemäße textile Flächengebilde können in an sich bekannter Weise verfestigt sein, beispielsweise durch mechanisches oder hydrodynamisches Nadeln, durch Aufschmelzen von im textilen Flächengebilde vorhandenen Bindefasern, durch thermisch-mechanisches Verfestigen oder durch Applikation von Bindemitteln.

Nach der Herstellung des textilen Flächengebildes wird dieses in an sich bekannter Weise nach dem "Doppelpunktverfahren" mit zwei Schichten unterschiedlicher Heißsiegelkleber versehen.

Als Heißsiegelkleber werden Kleber auf Polyolefinbasis mit den oben definierten Bereichen der Schmelzindizes (MFI-Werte) eingesetzt.

Unter Schmelzindex ist im Rahmen dieser Beschreibung der MFI-Wert, ermittelt nach DIN 53735: 1980-10 oder ISO 1133 zu verstehen.

Der Begriff Polyolefin umfasst neben von alpha-Olefinen, vorzugsweise von Propylen oder insbesondere von Ethylen, abgeleiteten Homopolymeren auch Copolymere, die neben von einem alpha-Olefin abgeleiteten Struktureinheiten auch von anderen ethylenisch ungesättigten Kohlenwasserstoffen, beispielsweise von weiteren alpha-Olefinen und/oder von Vinylaromaten, wie Styrol, abgeleitete Struktureinheiten enthalten.

Beispiele für alpha-Olefine sind Ethylen, Prop-1-en, But-1-en, Pent-1-en, Hex-1-en, Oct-1-en oder Dec-1-en.

Es können alle an sich bekannten Polyolefin-Typen eingesetzt werden. Beispiele dafür sind Polyolefine, die nach dem Ziegler-Natta-Verfahren oder unter Einsatz von Metallocen-Katalysatoren hergestellt worden sind.

Beispiele für bevorzugt eingesetzte Polyolefine sind Polyethylene, Polypropylene oder Copolymere abgeleitet von Ethylen und Propylen. Weitere Beispiele sind Copolymere abgeleitet von Ethylen oder von Propylen mit weiteren alpha-Olefinen höherer Kohlenstoffzahl, wie But-1-en, Pent-1-en, Hex-1-en, Oct-1-en oder Dec-1-en.

Als Polyethylene kommen Polyethylene verschiedenster Dichte und Schmelzbereiche in Betracht, sofern die oben definierten Bereiche für den MFI-Wert eingehalten werden.

Beispiele dafür sind Polyethylene niedriger Dichte (LDPE) einschließlich der linearen Polyethylene niedriger Dichte (LLDPE) und Polyethylene hoher Dichte (HDPE).

Vorzugsweise enthält eine, insbesondere beide Schichten des Heißsiegelklebers neben dem jeweiligen Polyolefin(gemisch) noch ein modifiziertes Polyolefin. Darunter ist ein Copolymer zu verstehen, das von mindestens einem alpha-Olefin, und einer ethylenisch ungesättigten Säure oder deren Anhydrid oder einer ethylenisch ungesättigten Epoxidverbindung oder einem Gemisch zweier oder mehreren dieser Comonomeren abgeleitet ist. Dabei kann die Modifikation auf beliebige Weise erfolgt sein, beispielsweise als Copolymerisation von alpha-Olefin Monomer(en) zusammen mit ausgewähltem Comonomer(en) und/oder als Pfropfung von ausgewählten polaren Comonomer(en) auf ein Polyolefin.

Beispiele für alpha-Olefine oder andere olefinisch ungesättigte Kohlenwasserstoffe, die zur Herstellung dieser Gruppe von Copolymeren einzeln oder in Kombination miteinander eingesetzt worden sind, wurden bereits weiter oben bei der Beschreibung der Herstellung der Homo- oder Copolymeren abgeleitet von einem oder mehreren alpha-Olefinen aufgezählt.

Bevorzugt setzt man in der Gruppe der modifizierten Polyolefine Polypropylene oder insbesondere Polyethylene oder Copolymere abgeleitet von Ethylen und Acrylsäure- und/oder Methacrylsäureestern, insbesondere den Alkylestern, ein.

Ganz besonders bevorzugt verwendet zur Modifikation mit polaren Gruppen Polyethylene niedriger Dichte (LDPE), lineare Polyethylene niedriger Dichte (LLDPE), Ethylen-Acrylsäurealkylester-Copolymere, Ethylen-Methacrylsäurealkylester-Copolymere und insbesondere Polyethylene hoher Dichte (HDPE).

Als Monomere mit polaren Gruppen zur Modifikation der Polyolefine werden ethylenisch ungesättigte Säuren, deren Anhydride und/oder ethylenisch ungesättigte Epoxidverbindungen oder Kombinationen von mehreren dieser Monomeren eingesetzt.

Bei den ethylenisch ungesättigten Säuren kann es sich um beliebige mit alpha-Olefinen polymerisierbare ethylenisch ungesättigte Reste handeln, die mindestens eine saure Gruppe im Molekül aufweisen. Beispiele dafür sind ethylenisch ungesättigte Sulfonsäuren, ethylenisch ungesättigte Phosphonsäuren oder insbesondere ethylenisch ungesättigte Carbonsäuren.

Bevorzugt werden ethylenisch ungesättigte Carbonsäuren mit ein oder zwei Carboxylgruppen eingesetzt.

Beispiele für bevorzugte Monomere dieses Typs sind Acrylsäure, Methacrylsäure, Maleinsäure, Fumarsäure oder Itaconsäure.

Anstelle der oder zusammen mit den oben aufgezählten Säuren können auch deren Anhydride eingesetzt werden.

Bei den ethylenisch ungesättigten Epoxidverbindungen kann es sich um beliebige mit alpha-Olefinen polymerisierbare Monomere handeln, die neben einer ethylenisch ungesättigten Gruppe mindestens eine Epoxidgruppe im Molekül aufweisen. Beispiele dafür sind Glycidylester von ethylenisch ungesättigten Säuren, insbesondere von ethylenisch ungesättigten Carbonsäuren.

Beispiele für bevorzugte Monomere dieses Typs sind Glycidylester der Acrylsäure, Methacrylsäure, Maleinsäure, Fumarsäure oder Itaconsäure.

Neben den bislang beschriebenen Monomeren können die modifizierten Polyolefine gegebenenfalls weitere polare Gruppen enthalten. Bevorzugt werden Ester ethylenisch ungesättigter Carbonsäuren eingesetzt.

Besonders bevorzugt werden Copolymere eingesetzt, die von mindestens einem alpha-Olefin und mindestens einer ethylenisch ungesättigten Säure oder deren Anhydrid oder einer ethylenisch ungesättigten Epoxidverbindung abgeleitet sind. Weiterhin bevorzugt eingesetzt werden Terpolymere, die sich ableiten von a) mindestens einem alpha-Olefin, b) von mindestens einem Ester einer ethylenisch ungesättigten Carbonsäure und c) von mindestens einer ethylenisch ungesättigten Säure oder dem Anhydrid einer ethylenisch ungesättigten Säure oder von einer ethylenisch ungesättigten Epoxidverbindung.

Bevorzugte Ester von ethylenisch ungesättigten Carbonsäuren sind die Alkylester, vorzugsweise von Alkylgruppen mit ein bis sechs Kohlenstoffatomen.

Besonders bevorzugte Beispiele sind die Methyl-, Ethyl-, Propyl-, Butyl-, Pentyl- oder Hexylester der Acrylsäure, Methacrylsäure, Maleinsäure, Fumarsäure oder Itaconsäure.

Der Anteil der Monomereinheiten mit Säure-, Anhydrid- und/oder Epoxidgruppen in den modifizierten Polyolefinen ist in der Regel recht gering und überschreitet typischerweise den Gehalt von 10 mol % nicht.

Zur Herstellung der mit polaren Gruppen modifizierten Polyolefine können ebenfalls die oben beschriebenen an sich bekannten Verfahren eingesetzt werden.

Modifizierte Polyolefine dieses Typs sind bekannt und kommerziell erhältlich. Beispiele für diese Produkte sind Produkte des Typs Lotader^{®} (Atochem) oder des Typs Orevac^{®} (Atochem).

Die erfindungsgemäß eingesetzten Heißsiegelkleber können daneben noch weitere an sich übliche Hilfsstoffe enthalten. Diese werden in Abhängigkeit des gewünschten Eigenschaftsprofils und der Aufbringungs- und Verarbeitungsweise des Heißsiegelklebers zugesetzt. Beispiele für solche Zusätze sind Emulgatoren, Verdicker, Pigmente und Verarbeitungshilfsmittel.

Die Materialeigenschaften der unmittelbar auf dem beschichteten textilen Flächengebilde aufliegenden Unterschicht sind zweckmäßig so auszuwählen, dass sie unter den Bedingungen der Heißsiegelverklebung einen geringeren thermoplastischen Fluss besitzen als die darüber liegende Oberschicht. Dieses lässt sich erfindungsgemäß durch Einsatz von Heißsiegelklebern mit den angegebenen Bereichen für den Schmelzindex entsprechend der Schmelzviskosität der Heißsiegelbeschichtung erreichen.

Die Heißsiegelkleber werden in Form eines regelmäßigen oder vorzugsweise irregulären Musters auf die Oberfläche des textilen Flächengebildes aufgetragen. Das Beschichtungsraster kann linien-, netz- oder spiralförmig sein oder kann in jeder anderen regelmäßig oder irregulär angeordneten Rasterform ausgeführt sein. Bevorzugt werden die Heißsiegelkleber in Form von Punktrastern, die vorzugsweise irregulär sind, aufgetragen.

In einer bevorzugten Ausführungsform enthält die unmittelbar auf dem Flächengebilde aufliegende Unterschicht 90 bis 100 Gew.% Polyethylen hoher Dichte (HDPE) und 0 bis 10 Gew. % eines Polyethylens oder eines Polyethylen-(methy)acrylester-Copolymeren, das mit mindestens einer ethylenisch ungesättigten Säure oder deren Anhydrid oder mit mindestens einer ethylenisch ungesättigten Epoxidverbindung modifiziert worden ist, und die auf der Unterschicht liegende Oberschicht enthält ein Polyethylen, das einen niedriger liegenden Schmelzbereich besitzt als das HDPE der Unterschicht und das darüber hinaus 0,1 bis 10 Gew. % eines Polyethylens oder eines Polyethylen-(methy)acrylester-Copolymeren, das mit mindestens einer ethylenisch ungesättigten Säure oder deren Anhydrid oder mit mindestens einer ethylenisch ungesättigten Epoxidverbindung modifiziert worden ist.

In einer weiteren bevorzugten Ausführungsform besteht die auf der dem Flächengebilde aufgetragene Unterschicht aus einer Paste, die in der Form eines irregulären Punktrasters auf das Flächengebilde aufgetragen wurde und die darüber liegende Oberschicht besteht aus einem Pulver oder einer Pulvermischung, das/die auf das Flächengebilde aufgetragen wurde(n). An den Stellen, an denen sich die Paste befindet, wird das Pulver(gemisch) festgehalten, während es sich an den anderen Stellen von der Oberfläche des Flächengebildes leicht entfernen lässt.

Der Anteil von mit polaren Gruppen modifizierten Polyolefin in den erfindungsgemäß eingesetzten Heißsiegelklebern bewegt sich typischerweise unterhalb von 20 Gew. %, vorzugsweise im Bereich von 0,1 bis 10 Gew. %, bezogen auf die Masse des Heißsiegelklebers.

Das Verhältnis der Massen der erfindungsgemäß eingesetzten ersten und zweiten Heißsiegelkleber kann in weiten Bereichen schwanken und bewegt sich typischerweise im Bereich von 5:1 bis 1:5, vorzugsweise im Bereich von 2:1 bis 1:3.

Die Erfindung betrifft auch ein Verfahren zur Herstellung des oben beschriebenen textilen Flächengebildes. Das Verfahren umfasst die Schritte:
a) Herstellung eines textilen Flächengebildes durch eine textile Flächenbildungstechnik in an sich bekannter Weise,
b) Auftragen einer Schicht eines ersten Heißsiegelklebers in Form eines regelmäßigen oder irregulären Musters auf das textile Flächengebilde in an sich bekannter Weise und
c) Auftragen einer Schicht eines zweiten Heißsiegelklebers auf das textile Flächengebilde, so dass sich eine Schicht aus dem zweiten Heißsiegelkleber über der Schicht des ersten Heißsiegelklebers in an sich bekannter Weise ausbildet.

Dabei werden die ersten und zweiten Heißsiegelkleber gemäß den obigen Definitionen eingesetzt.

Bei dem Verfahren handelt es sich um ein modifiziertes "Doppelpunktverfahren", das durch den Einsatz ausgewählter Heißsiegelkleber charakterisiert ist.

Die Herstellung der erfindungsgemäß eingesetzten Heißsiegelkleber kann dabei auf verschiedenen Wegen erfolgen.

Beispiele dafür sind die Vermahlung der Komponenten mit nachheriger Pulvermischung, die Mischung der Komponenten in Granulatform mit anschließender Vermahlung, sowie die Mischung der Komponenten mittels Extrusion gefolgt von anschließender Vermahlung.

Das Auftragen der Heißsiegelkleber kann ebenfalls nach unterschiedlichen an sich bekannten Verfahren erfolgen.

So kann in einem ersten Schritt eine Paste des ersten Heißsiegelklebers auf das textile Flächengebilde in Form eines regelmäßigen oder vorzugsweise irregulären Musters aufgetragen werden. Der Auftrag kann dabei durch Siebdruck oder durch Aufbringen durch eine strukturierte Walze erfolgen. In einem zweiten Schritt kann dann ein Pulver aus dem zweiten Heißsiegelkleber auf das textile Flächengebilde aufgestreut werden, dass an den Stellen des ersten Heißsiegelklebers an der Paste kleben bleibt. Von den übrigen Stellen der Oberfläche des textilen Flächengebildes kann das Pulver durch Absaugen entfernt werden. In einer nachfolgenden thermischen Behandlung werden der erste und zweite Heißsiegelkleber als übereinanderliegende Schichten fixiert.

Die erfindungsgemäß modifizierten textilen Flächengebilde lassen sich als Einlage- oder Futterstoffe einsetzen. Die Erfindung betrifft auch Verwendung zu diesen Zwecken, insbesondere als Verfestigungseinlage und/oder als Futterstoff.

Die erfindungsgemäß modifizierten textilen Flächengebilde können mit einem zu verstärkenden textilen Oberstoff in an sich bekannter Weise verklebt werden.

Die nachstehenden Beispiele erläutern die Erfindung ohne diese zu begrenzen.

### Beispiel 1:

100 % Polyester ("PES") Vliesstoffbasis mit 25 g/m² Flächengewicht wurde nach dem an sich bekanntem Doppelpunktverfahren beschichtet. Dabei wurde für den Unterpunkt eine Paste eingesetzt, die mit den üblichen Hilfsstoffen, wie Emulgator, Verdicker und Prozesshilfsmitteln angesetzt war. Diese Paste enthielt ferner als Polymerkomponenten a) ein HDPE mit einem Schmelzpunkt von 130°C und einem MFI-Wert von kleiner als 10 (g/10 min) (ermittelt bei 190°C unter einer Belastung von 2,16 kg) und b) ein Terpolymer abgeleitet von Ethylen, Acylsäureestern und Maleinsäureanhydrid mit einem Schmelzpunkt von 107°C und einem MFI-Wert von 5 (g/10 min) (ermittelt bei 190°C unter einer Belastung von 2,16 kg), wobei das Mischungsverhältnis von a) zu b) 95 zu 5 betrug.

Als Streupulver für den Oberpunkt wurde eine Mischung aus a') einem HDPE mit einem Schmelzpunkt von 125 °C und einem MFI-Wert von größer als 20 (g/10 min) (ermittelt bei 190°C bei einer Belastung von 2,16 kg) und b') einem Terpolymer abgeleitet von Ethylen, Acylsäureestern und Maleinsäureanhydrid mit einem Schmelzpunkt von 107°C und einem MFI-Wert von 5 (g/10 min) (ermittelt bei 190°C unter einer Belastung von 2,16 kg) aufgetragen, wobei das Mischungsverhältnis von a') zu b') 97:3 betrug.

Im Beschichtungsprozess wurden 5g Unterpunktpaste aufgetragen und mit 8g Streupulver belegt.

Die derart dargestellt Einlage konnte bei Temperaturen kleiner 135°C gegen verschiedene Oberstoffe mit sehr guter Haftung fixiert werden und war gegen eine 95°C Wäsche beständig. Je nach Oberstoff war auch schon eine Fixierung bei 120°C möglich und zeigte auch nach dem post processing Schritt des "garment dyeing" sehr gute Haftung und keinen "color pick up".

### Beispiel 2:

Eine Vliesstoffbasis mit 25 g/m² Flächengewicht und einer 70/30 Polyamid /Polyester ("PA/PES") Fasermischung wurde nach dem Doppelpunktverfahren beschichtet. Dabei wurde für den Unterpunkt eine Paste eingesetzt, die mit den üblichen Hilfsstoffen, wie Emulgator, Verdicker und Prozesshilfsmitteln, angesetzt war. Als Polymerkomponenten enthielt die Paste ein HDPE mit einem Schmelzpunkt von 130°C und einem MFI-Wert von kleiner als 10 (g/10 min) (gemessen bei 190°C und 2,16 kg Belastung) sowie ein mit Maleinsäureanhydrid gepfropftes lineares Polyethylen niedriger Dichte ("LLDPE") mit einem Schmelzpunkt von 120°C und einem MFI-Wert von 2,5 (g/10 min) (gemessen bei 190°C und 2,16 kg Belastung) in einem Mischungsverhältnis 97 zu 3. Als Streupulver für den Oberpunkt wurde eine Mischung aus einem HDPE mit einem Schmelzpunkt von 125 °C und einem MFI-Wert von größer 20 (g/10 min) (gemessen bei 190°C und 2,16 kg Belastung) und einem Terpolymer abgeleitet von Ethylen, Acylsäureestern und Maleinsäureanhydrid mit einem Schmelzpunkt von 107°C und einem MFI-Wert von 5 (g/10 min) (gemessen bei 190°C und 2,16 kg Belastung) in einem Mischungsverhältnis von 97:3 eingesetzt. Im Beschichtungsprozess wurden 5g Unterpunktpaste aufgetragen und mit 8g Streupulver belegt.

Die derart dargestellt Einlage konnte bei Temperaturen kleiner als 135°C gegen verschiedene Oberstoffe mit sehr guter Haftung fixiert werden und war gegen eine 95°C Wäsche beständig.

## Patentansprüche

1. Textiles Flächengebilde mit einer rasterförmigen Beschichtung aus zwei übereinanderliegenden rasterförmigen Schichten aus Heißsiegelklebern unterschiedlicher Kleberbeschaffenheit, **dadurch gekennzeichnet, dass** beide Schichten aus Heißsiegelklebern Polyolefine enthalten, dass die direkt auf dem textilen Flächengebilde aufgetragene erste Heißsiegelkleberschicht einen MFI-Wert von kleiner gleich 10 g/10 Minuten (190°C /2,16 kg) aufweist und dass die auf der ersten Heißsiegelkleberschicht aufgetragene zweite Heißsiegelkleberschicht einen MFI-Wert von 11 bis 50 g/10 Minuten (190°C /2,16 kg) aufweist.

2. Textiles Flächengebilde nach Anspruch 1, **dadurch gekennzeichnet, dass** der zur Ausbildung der ersten Schicht eingesetzte Heißsiegelkleber auf der Basis von Polyolefin einen MFI-Wert von 6 bis 9 g/10 Minuten (190°C /2,16 kg) und dass der zur Ausbildung der zweiten Schicht eingesetzte Heißsiegelkleber auf der Basis von Polyolefin einen MFI-Wert von 11 bis 30, insbesondere von 15 bis 25 g/10 Minuten (190°C /2,16 kg) aufweist.

3. Textiles Flächengebilde nach Anspruch 1, **dadurch gekennzeichnet, dass** ein erster Heißsiegelkleber eingesetzt wird, der mindestens ein Polyethylen hoher Dichte ("HDPE") enthält, dass ein zweiter Heißsiegelkleber eingesetzt wird, der mindestens ein Homo- oder Copolymer abgeleitet von einem oder mehreren alpha-Olefinen enthält und dass mindestens einer der Heißsiegelkleber zusätzlich mindestens ein Copolymer enthält, das von mindestens einem alpha-Olefin, und mindestens einer ethylenisch ungesättigten Säure und/oder deren Anhydrid und/oder einer ethylenisch ungesättigten Epoxidverbindung abgeleitet ist.

4. Textiles Flächengebilde nach Anspruch 3, **dadurch gekennzeichnet, dass** das Homo- oder Copolymer abgeleitet von einem oder mehreren alpha-Olefinen ein Polyethylen ist.

5. Textiles Flächengebilde nach Anspruch 3, **dadurch gekennzeichnet, dass** das Copolymer, das von mindestens einem alpha-Olefin, und mindestens einer ethylenisch ungesättigten Säure und/oder deren Anhydrid und/oder einer ethylenisch ungesättigten Epoxidverbindung abgeleitet ist, ein Polyethylen oder ein Ethylen-(Meth)acrylsäureester-Copolymeres ist, das mit mindestens einer ethylenisch ungesättigten Säure und/oder deren Anhydrid und/oder mit mindestens einer ethylenisch ungesättigten Epoxidverbindung copolymerisiert wurde oder mit einem oder mehreren dieser Monomeren gepfropft wurde.

6. Textiles Flächengebilde nach Anspruch 5, **dadurch gekennzeichnet, dass** das alpha-Olefin Ethylen ist, die ethylenisch ungesättigte Säure eine ethylenisch ungesättigte Carbonsäure mit ein oder zwei Carboxylgruppen ist und die ethylenisch ungesättigte Epoxidverbindung ein Glycidylester einer ethylenisch ungesättigten Carbonsäure ist.

7. Textiles Flächengebilde nach Anspruch 6, **dadurch gekennzeichnet, dass** die ethylenisch ungesättigte Carbonsäure Acrylsäure, Methacrylsäure, Maleinsäure, Fumarsäure oder Itaconsäure ist und das die ethylenisch ungesättigte Epoxidverbindung ein Glycidylester der Acrylsäure, Methacrylsäure, Maleinsäure, Fumarsäure oder Itaconsäure ist.

8. Textiles Flächengebilde nach Anspruch 1, **dadurch gekennzeichnet, dass**
A) die unmittelbar auf dem Flächengebilde aufliegende Unterschicht 90 bis 100 Gew.% Polyethylen hoher Dichte (HDPE) enthält und 0 bis 10 Gew. % eines Polyethylens oder eines Ethylen-(Meth)acrylsäure-alkylester-Copolymeren, das mit mindestens einer ethylenisch ungesättigten Säure und/oder deren Anhydrid und/oder mit mindestens einer ethylenisch ungesättigten Epoxidverbindung modifiziert worden ist, und dass
B) die auf der Unterschicht liegende Oberschicht ein Polyethylen enthält, das einen niedriger liegenden Schmelzbereich besitzt als das HDPE der Unterschicht und das darüber hinaus 0,1 bis 10 Gew. % eines Polyethylens oder eines Ethylen-(Meth)acrylsäure-alkylester-Copolymeren enthält, das mit mindestens einer ethylenisch ungesättigten Säure und/oder deren Anhydrid und/oder mit mindestens einer ethylenisch ungesättigten Epoxidverbindung modifiziert worden ist

9. Textiles Flächengebilde nach Anspruch 1, **dadurch gekennzeichnet, dass** dieses ausgewählt wird aus der Gruppe bestehend aus Gewebe, Gestrick, Gelege, Gewirke oder insbesondere Vliesstoff.

10. Textiles Flächengebilde nach Anspruch 1, **dadurch gekennzeichnet, dass** der auf der dem Flächengebilde als Unterschicht aufgetragene erste Heißsiegelkleber aus einer Paste besteht, die in der Form eines irregulären Punktrasters auf das Flächengebilde aufgetragen wurde und dass die darüber liegende Oberschicht des zweiten Heißsiegelklebers aus einem Pulver oder einer Pulvermischung besteht, das/die auf das Flächengebilde aufgetragen wurde und an den Stellen, an denen sich die Paste befindet, von dieser festgehalten wird.

11. Textiles Flächengebilde nach Anspruch 1, **dadurch gekennzeichnet, dass** das Verhältnis der Massen des ersten und zweiten Heißsiegelklebers 2:1 bis 1:3 beträgt.

12. Verfahren zur Herstellung des textilen Flächengebildes nach Anspruch 1 umfassend die Schritte:
a) Herstellung eines textilen Flächengebildes durch eine textile Flächenbildungstechnik in an sich bekannter Weise,
b) Auftragen einer Schicht eines ersten Heißsiegelklebers in Form eines regelmäßigen oder irregulären Musters auf das textile Flächengebilde in an sich bekannter Weise und
c) Auftragen einer Schicht eines zweiten Heißsiegelklebers auf das textile Flächengebilde, so dass sich eine
Schicht aus dem zweiten Heißsiegelkleber über der Schicht des ersten Heißsiegelklebers in an sich bekannter Weise ausbildet,
wobei als erster und zweiter Heißsiegelkleber Polyolefinzusammensetzungen gemäß Anspruch 1 eingesetzt werden.

13. Verfahren nach Anspruch 12, **dadurch gekennzeichnet, dass** in einem ersten Schritt eine Paste des ersten Heißsiegelklebers auf das textile Flächengebilde in Form eines regelmäßigen oder vorzugsweise irregulären Musters aufgetragen wird, in einem zweiten Schritt ein Pulver aus dem zweiten Heißsiegelkleber auf das textile Flächengebilde aufgestreut wird, dass an den Stellen des ersten Heißsiegelklebers an der Paste kleben bleibt und von den übrigen Stellen der Oberfläche des textilen Flächengebildes durch Absaugen entfernt wird und dass in einer nachfolgenden thermischen Behandlung der erste und zweite Heißsiegelkleber als übereinanderliegende Schichten fixiert werden.

14. Verwendung des textilen Flächengebildes nach Anspruch 1 als Einlagestoff, insbesondere aus Verfestigungseinlage und/oder als Futterstoff.

## Claims

1. A textile fabric with a grid-shaped coating of two superposed grid-shaped layers of heat-sealing adhesives differing in constitution of adhesive, **characterized in that** both the layers of heat-sealing adhesives contain polyolefins, **in that** the first heat-sealing adhesive layer applied directly atop the textile fabric has an MFI value of not more than 10 g/10 minutes (190°C/2.16 kg), and **in that** the second heat-sealing adhesive layer applied atop the first heat-sealing adhesive layer has an MFI value of 11 to 50 g/10 minutes (190°C/2.16 kg).

2. A textile fabric according to claim 1, **characterized in that** the heat-sealing adhesive used to form the first layer is based on polyolefin and has an MFI value of 6 to 9 g/10 minutes (190°C/2.16 kg) and **in that** the heat-sealing adhesive used to form the second layer is based on polyolefin and has an MFI value of 11 to 30, in particular 15 to 25 g/10 minutes (190°C/2.16 kg).

3. A textile fabric according to claim 1, **characterized in that** a first heat-sealing adhesive used contains at least one high density polyethylene (HDPE), **in that** a second heat-sealing adhesive used contains at least one homo- or copolymer derived from one or more alpha-olefins, and **in that** at least one of the heat-sealing adhesives additionally contains at least one copolymer derived from at least one alpha-olefin and at least one ethylenically unsaturated acid and/or acid anhydride and/or an ethylenically unsaturated epoxy compound.

4. A textile fabric according to claim 3, **characterized in that** the homo- or copolymer derived from one or more alpha-olefins is a polyethylene.

5. A textile fabric according to claim 3, **characterized in that** the copolymer derived from at least one alpha-olefin and at least one ethylenically unsaturated acid and/or acid anhydride and/or an ethylenically unsaturated epoxy compound is a polyethylene or an ethylene-(meth)acrylic ester copolymer copolymerized with at least one ethylenically unsaturated acid and/or acid anhydride and/or with at least one ethylenically unsaturated epoxy compound or grafted with one or more of these monomers.

6. A textile fabric according to claim 5, **characterized in that** the alpha-olefin is ethylene, the ethylenically unsaturated acid is an ethylenically unsaturated carboxylic acid having one or two carboxyl groups, and the ethylenically unsaturated epoxy compound is a glycidyl ester of an ethylenically unsaturated carboxylic acid.

7. A textile fabric according to claim 6, **characterized in that** the ethylenically unsaturated carboxylic acid is acrylic acid, methacrylic acid, maleic acid, fumaric acid or itaconic acid and the ethylenically unsaturated epoxy compound is a glycidyl ester of acrylic acid, methacrylic acid, maleic acid, fumaric acid or itaconic acid.

8. A textile fabric according to claim 1, **characterized in that**
A) the underlayer lying immediately on the fabric contains 90% to 100% by weight of high density polyethylene (HDPE) and 0% to 10% by weight of a polyethylene or of an ethylene-alkyl (meth)acrylate copolymer modified with at least one ethylenically unsaturated acid and/or acid anhydride and/or with at least one ethylenically unsaturated epoxy compound, and **in that**
B) the overlayer lying on the underlayer contains a polyethylene having a lower melting range than the HDPE of the underlayer and additionally containing 0.1% to 10% by weight of a polyethylene or of an ethylene-alkyl (meth)acrylate copolymer modified with at least one ethylenically unsaturated acid and/or acid anhydride and/or with at least one ethylenically unsaturated epoxy compound.

9. A textile fabric according to claim 1, **characterized in that** it is selected from the group consisting of woven fabric, loop-drawingly knitted fabric, laid fabric, loop-formingly knitted fabric or especially nonwoven fabric.

10. A, textile fabric according to claim 1, **characterized in that** the first heat-sealing adhesive applied atop the fabric as an underlayer consists of a paste applied in the form of an irregular grid of dots atop the fabric, and **in that** the overlying overlayer of the second heat-sealing adhesive consists of a powder or powder mixture which was applied atop the fabric and in those areas where there is paste is retained by the paste.

11. A textile fabric according to claim 1, **characterized in that** the ratio of the masses of the first and second heat-sealing adhesives is in the range from 2:1 to 1:3.

12. A method of producing the textile fabric according to claim 1, comprising the steps of:
a) producing a textile fabric by a textile fabric-forming technique in a conventional manner,
b) applying a layer of a first heat-sealing adhesive in the form of a regular or irregular pattern atop the textile fabric in a conventional manner and
c) applying a layer of a second heat-sealing adhesive atop the textile fabric to form a layer of the second heat-sealing adhesive over the layer of the first heat-sealing adhesive in a conventional manner,
polyolefin compositions according to claim 1 being used as first and second heat-sealing adhesives.

13. A method according to claim 12, **characterized in that** a paste of the first-sealing adhesive is applied atop the textile fabric in the form of a regular or preferably irregular pattern in a first step, a powder of the second heat-sealing adhesive is sprinkled onto the textile fabric in a second step and remains sticking to the paste in the locations of the first heat-sealing adhesive and is sucked away from the other locations on the surface of the textile fabric, and **in that** in a subsequent thermal treatment the first and second heat-sealing adhesives are fixed as superposed layers.

14. The use of the textile fabric according to claim 1 as an interlining, in particular as a reinforcing interlining and/or as a lining.

## Revendications

1. Structure textile plane dotée d'un revêtement en forme de trame composé de deux couches en forme de trame superposées de colles thermofusibles ayant des propriétés adhésives différentes, **caractérisée en ce que** les deux couches de colles thermofusibles contiennent des polyoléfines, **en ce que** la première couche de colle thermofusible déposée directement sur la structure textile plane présente un indice MFI inférieur ou égal à 10 g/10 minutes (190°C/2,16 kg) et **en ce que** la deuxième couche de colle thermofusible déposée sur la première couche de colle thermofusible présente un indice MFI dans la plage de 11 à 50 g/10 minutes (190°C/12,16 kg).

2. Structure textile plane selon la revendication 1, **caractérisée en ce que** la colle thermofusible à base de polyoléfine utilisée pour former la première couche présente un indice MFI de 6 à 9 g/10 minutes (190°C/2,16 kg) et **en ce que** la colle thermofusible à base de polyoléfine utilisée pour former la deuxième couche présente un indice MFI dans la plage de 11 à 30, en particulier de 15 à 25 g/10 minutes (190°C/2,16 kg).

3. Structure textile plane selon la revendication 1, **caractérisée en ce que** l'on utilise une première colle thermofusible qui contient au moins un polyéthylène à haute densité ("PEHD"), **en ce que** l'on utilise une deuxième colle thermofusible qui contient au moins un homo- ou copolymère dérivé d'une ou plusieurs alpha-oléfines, et **en ce que** l'une au moins des colles thermofusibles contient en plus au moins un copolymère qui est dérivé d'au moins une alpha-oléfine et d'au moins un acide éthyléniquement insaturé et/ou son anhydride, et/ou d'un composé époxyde éthyléniquement insaturé.

4. Structure textile plane selon la revendication 3, **caractérisée** eh ce que l'homo- ou copolymère qui est dérivé d'une ou plusieurs alpha-oléfines est un polyéthylène.

5. Structure textile plane selon la revendication 3, **caractérisée en ce que** le copolymère qui est dérivé d'au moins une alpha-oléfine et d'au moins un acide éthyléniquement insaturé et/ou son anhydride et/ou d'un composé époxyde éthyléniquement insaturé est un polyéthylène ou un copolymère d'éthylène et de (méth)acrylate qui a été copolymérisé avec au moins un acide éthyléniquement insaturé et/ou son anhydride et/ou avec au moins un composé époxyde éthyléniquement insaturé ou qui a été greffé avec un ou plusieurs de ces monomères.

6. Structure textile plane selon la revendication 5, **caractérisée en ce que** l'alpha-oléfine est l'éthylène, **en ce que** l'acide éthyléniquement insaturé est un acide carboxylique éthyléniquement insaturé contenant un ou deux groupes carboxyle, et **en ce que** le composé époxyde éthyléniquement insaturé est un ester glycidylique d'un acide carboxylique éthyléniquement insaturé.

7. Structure textile plane selon la revendication 6, **caractérisée en ce que** l'acide carboxylique éthyléniquement insaturé est l'acide acrylique, l'acide méthacrylique, l'acide maléique, l'acide fumarique ou l'acide itaconique, et **en ce que** le composé époxyde éthyléniquement insaturé est un ester glycidylique de l'acide acrylique, l'acide méthacrylique, l'acide maléique, l'acide fumarique ou l'acide itaconique.

8. Structure textile plane selon la revendication 1, **caractérisée en ce que** :
A) la couche inférieure placée directement sur la structure textile plane contient de 90 à 100 % en poids de polyéthylène à haute densité (PEHD) et de 0 à 10 % en poids d'un polyéthylène ou d'un copolymère d'éthylène et de (méth)acrylate d'alkyle qui a été modifié avec au moins un acide éthyléniquement insaturé et/ou son anhydride et/ou avec au moins un composé époxyde éthyléniquement insaturé, et **en ce que**
B) la couche supérieure déposée sur la couche inférieure contient un polyéthylène dont la plage de fusion se situe en dessous de celle du PEHD de la couche inférieure et contient en plus de 0,1 à 10 % en poids d'un polyéthylène ou d'un copolymère d'éthylène et de (méth)acrylate d'alkyle qui a été modifié avec au moins un acide éthyléniquement insaturé et/ou son anhydride et/ou avec au moins un composé époxyde éthyléniquement insaturé.

9. Structure textile plane selon la revendication 1, **caractérisée en ce qu'**elle est choisie dans le groupe constitué par un tissu, un tricot, un non-tissé, un tulle ou en particulier une nappe de fibres.

10. Structure textile plane selon la revendication 1, **caractérisée en ce que** la première colle thermofusible déposée en tant que couche inférieure sur la structure textile plane se compose d'une pâte qui a été déposée sous la forme d'une trame de points irrégulière sur la structure textile plane et **en ce que** la couche supérieure de la deuxième colle thermofusible appliquée par dessus se compose d'une poudre ou d'un mélange de poudres qui a été déposée sur la structure textile plane et qui est maintenue par la pâte aux endroits où celle-ci se trouve.

11. Structure textile plane selon la revendication 1, **caractérisée en ce que** le rapport des masses des première et deuxième colles thermofusibles se situe dans la plage de 2:1 à 1:3.

12. Procédé de production de la structure textile plane selon la revendication 1, comprenant les étapes suivantes :
a) Réalisation d'une structure textile plane par une technique de formation de structure textile plane, d'une manière en soi connue,
b) Dépôt d'une couche d'une première colle thermofusible sous la forme d'un motif régulier ou irrégulier sur la structure textile plane, d'une manière en soi connue, et
c) Dépôt d'une couche d'une deuxième colle thermofusible sur la structure textile plane afin de former une couche de la deuxième colle thermofusible par dessus la couche de la première colle thermofusible, d'une manière en soi connue,
en utilisant en tant que première et deuxième colle thermofusible des compositions de polyoléfines selon la revendication 1.

13. Procédé selon la revendication 12, **caractérisé en ce que**, dans une première étape, une pâte de la première colle thermofusible est déposée sur la structure textile plane sous la forme d'un motif régulier ou de préférence irrégulier, **en ce que**, dans une deuxième étape, une poudre de la deuxième colle thermofusible est répandue sur la structure textile plane, reste collée à la pâte aux endroits où la première colle thermofusible a été déposée et est enlevée par aspiration des autres endroits de la surface de la structure textile plane, et **en ce que**, par un traitement thermique effectué ensuite, la première et la deuxième colle thermofusible sont fixées sous la forme de couches superposées.

14. Utilisation de la structure textile plane selon la revendication 1 comme armature textile, notamment comme armature de renfort, et/ou comme doublure.
